# EUROPÄISCHE PATENTSCHRIFT

(11) **EP 3 385 698 B1**
(45) Veröffentlichungstag und Bekanntmachung des Hinweises auf die Patenterteilung: **09.08.2023**
(21) Anmeldenummer: 18165572.1
(22) Anmeldetag: 04.04.2018
(51) Int. Cl.: G01N 3/46

(54) **VERFAHREN ZUR ANALYSE VON OBERFLÄCHENMESSUNGEN**
METHOD FOR THE ANALYSIS OF SURFACE MEASUREMENTS
PROCÉDÉ D'ANALYSE DE MESURES DE SURFACE

(30) Priorität: 05.04.2017 DE 102017107270; 05.04.2017 US 201762481705 P
(43) Veröffentlichungstag der Anmeldung: 10.10.2018
(73) Patentinhaber: ASMEC Advanced Surface Mechanics GmbH, 01109 Dresden (DE)
(72) Erfinder: Chudoba, Thomas, 01099 Dresden (DE)
(74) Vertreter: Rumrich, Gabriele

(56) Entgegenhaltungen:
- EP-A1- 2 065 695
- WO-A2-2004/036178
- FR-A1- 2 952 717
- US-A1- 2009 260 883

## Beschreibung

Die Erfindung betrifft ein Verfahren zur Analyse von Oberflächenmessungen und findet insbesondere zur Analyse von Scratchtests, Verschleißtests oder profilometrischen Messungen Anwendung.

Das Abtasten der Oberfläche mit einer feinen Spitze von wenigen Mikrometern Durchmesser, üblicherweise aus Diamant, und bei einer konstanten Tastkraft ist eine gängige Methode um das Oberflächenprofil einer Probe mit mechanischen Mitteln zu bestimmen. Diese Methode findet Anwendung in Profilometern oder Tastschnittgeräten, sowie in einigen Scratchtestern und Nanoindentern. Als Ergebnis erhält man mindestens eine Kurve, die das Höhenprofil in Abhängigkeit vom Abtastweg darstellt und die in einer Grafik auf einem Bildschirm angezeigt wird. Korrekturen sind an der Kurve üblich, wobei zum Beispiel eine Probenneigung oder eine Welligkeit korrigiert wird. Ein optisches Bild der Oberfläche mit hoher Vergrößerung wird entweder gar nicht aufgenommen oder es wird unabhängig von der Grafik mit der Messkurve angezeigt. Die Messtrecke ist üblicherweise wesentlich länger als die Bildbreite, wobei diese einer Vergrößerung von mindestens 500x entspricht. Eine Methode bei der genau der Teil der Grafik im optischen Bild angezeigt wird, der genau der Bildposition und Bildbreite entspricht, ist bisher nicht bekannt.

Im Patent EP 2 065 695 B1 wird ein Verfahren zur Analyse eines Kratztestkratzers unter Verwendung eines digitalen Bildaufnahmegeräts mit einem Objektiv mit starker Vergrößerung beschrieben. Das Objektiv ist derart ausgebildet, dass es nur einen Abschnitt des Kratzers aufnimmt. Des Weiteren wird ein Substrat verwendet, welches mittels eines Indentierers mit einer Kraft beaufschlagt wird. Kennzeichnend für das Verfahren ist zu Beginn des Verfahrens die Bestimmung der Anfangsposition des Kratzers in Bezug auf eine Referenzposition. Im Anschluss erfolgt die Herstellung des Kratzers auf dem Substrat mittels des Indentierers bei Aufzeichnung der aufgewendeten Kraft und mindestens eines weiteren Messparameters in Abhängigkeit von der Verlagerung des Indentierers auf dem Substrat in Bezug auf die Referenzposition. Es folgt die Aufzeichnung einer Serie von Bildern mittels des Aufnahmegeräts. Die Position des aufgenommenen Bildes des Kratzers wird dabei immer in Bezug auf die Referenzposition bezogen.

Es folgt die Synchronisierung der aufgezeichneten Bilder mit der Kurve der aufgewendeten Kraft sowie dem weiteren Messparameter, wobei diese dann im Folgenden an einem Bildschirm ausgebbar sind. Die Einblendung des Kraftverlaufs mittels der Kurve wird somit nach der erfolgten Messung in einem Diagramm in Bezug auf eine Referenzposition dargestellt. Es kann kein Kraftverlauf in das aktuelle Live-Bild eingeblendet werden. Weiterhin ist nachteilig, dass immer eine Referenzposition zur Bestimmung der Anfangsposition benötigt wird.

Bei Mikro-Scratchtests ist es üblich, die Oberfläche vor und nach dem Test abzutasten und die Profile zusammen mit der Eindringtiefe unter Last darzustellen. Dieses Verfahren wurde bereits in den Patenten WO 1994/008219 A1 und US 5,992,224 A und in analoger Form im Patent WO 1999/046576 A1 im Zusammenhang mit einem Apparat zur Bestimmung der Kratzfestigkeit dargestellt. In keinem dieser Patente werden jedoch die gemessenen Profile im Bild der Oberfläche dargestellt, insbesondere nicht so, dass auch bei einem Verschieben der Probe, im Bild automatisch immer der korrekte Teil der Kurve dargestellt wird, der genau der Bildbreite entspricht.

Die Druckschrift WO 2004/036178 A2 beschreibt ein Härteprüfsystem, aufweisend einen Rahmen mit einem beweglichen Revolverkopf, einen beweglichen Tisch zur Aufnahme eines Werkstücks, eine Kamera, eine Anzeige, einen Prozessor und ein Speicher-Subsystem. Der Revolverkopf enthält eine Objektivlinse eines Mikroskops und einen Eindringkörper.

Der bewegliche Tisch ist so konfiguriert, dass er das zu prüfende Werkstück aufnimmt. Die Kamera nimmt Bilder des Werkstücks durch das Mikroskop auf, die dann auf dem Display angezeigt werden können. Der Prozessor ist mit dem Revolver, dem beweglichen Tisch, der Kamera und der Anzeige sowie mit dem Speicher-Subsystem verbunden. Das Speichersubsystem speichert einen ausführbaren Code, der den Prozessor anweist, eine Reihe von Echtzeitbildern des Werkstücks mit der Kamera zu erfassen und mit zugehörigen Tischkoordinaten, die vom Tisch für die Bilder bereitgestellt werden zu speichern und ein zusammengesetztes Bild anzuzeigen, das die Reihe von Echtzeitbildern enthält, die entsprechend den zugehörigen Tischkoordinaten zusammengesetzt wurden.

Die Druckschrift FR 2 952 717 A1 beschreibt eine Vorrichtung mit einer Zug- oder Druckmaschine, die ein Reagenzglas aufnimmt und das Reagenzglas entlang einer Belastungsachse mechanisch belastet. Des Weiteren weist die Vorrichtung ein Lasermodul besteht aus einem Lasersender und einem Laserempfänger, die gegenüber einem Lasersender angeordnet sind und eine Beobachtungsachse senkrecht zur Belastungsachse bilden, auf. Das Lasermodul ist entlang der Beladungsachse verschiebbar gelagert, um eine Abtastung des Teströhrchens zu ermöglichen und ein Profil des Teströhrchens nach der Beladung zu bestimmen. Ein Prozessor bestimmt aus dem, vom Lasermodul ermittelten Profil Eigenschaften eines Materials.

In der Druckschrift US 2009/260883 A1 wird ein Verfahren zur kontinuierlichen Messung der Heterogenität von Geomaterialien beschrieben. Das Verfahren umfasst das Identifizieren eines Kernabschnitts aus einem Bohrloch.

Aufgabe der Erfindung ist es, ein Verfahren zur Analyse von Oberflächenmessungen zu entwickeln, insbesondere für Scratchtests, Verschleißtests oder profilometrischen Messungen bei dem eine Grafik mit den Kurven der bereits analysierten Ergebnisse in einem Bild darstellbar ist.

Diese Aufgabe wird mit den kennzeichnenden Merkmalen des ersten Patentanspruchs gelöst.

Vorteilhafte Ausgestaltungen ergeben sich aus den Unteransprüchen.

Die Erfindung betrifft ein Verfahren zur Analyse von Oberflächenmessungen, insbesondere Scratchtests, Verschleißtests oder profilometrischen Messungen wobei ein automatisches Tischsystem für die Lage und Messstrecke des zu analysierenden Bereichs Anwendung findet, wobei die Tischkoordinaten des Tischsystems als Referenz dienen und bei dem eine Grafik mit den Kurven der bereits analysierten Ergebnisse mit der X-Achse als Koordinatenachse entlang der Messstrecke so über das Live-Bild oder nachträglich über ein gespeichertes Bild der Messstrecke gelegt wird, dass die X-Koordinaten im Bild mit den X-Koordinaten der Kurven übereinstimmen. Die X-Koordinaten des Bildes und die X-Koordinaten der Kurven sind dabei den Tischkoordinaten in Bezug auf den Verfahrweg des Tisches entnehmbar.

Dabei nehmen die Messkurven vorzugsweise die gesamte Breite des Bildes ein und werden automatisch an das Bild angepasst, wenn sich der Ausschnitt der Probe, der im Bild dargestellt wird, ändert. Es wird immer nur der Teil der Messtrecke und der Kurven dargestellt, der in die Bildbreite des auf dem Bildschirm dargestellten Bildes der aufnehmenden Kamera passt. Die Kombination des Bildes mit der Grafik in Form der Messkurven und Koordinatenachsen mit zugehörigen Einheiten wird folgend als neues Bild gespeichert.

Die Position der Grafik, deren Höhe üblicherweise kleiner ist als die Höhe des optischen Bildes, kann innerhalb der Höhe des Bildes verschoben werden, so dass sie den Messbereich nicht, teilweise oder ganz überdeckt wobei der Hintergrund der Grafik transparent ist, so dass nur die Achsen mit Beschriftung und die Kurven selbst im Bild zu sehen sind. Die Kombination des Bildes mit der Grafik kann dann als neues Bild gespeichert werden. Durch den Nutzer kann ausgewählt werden, welche Kurven auf einer oder mehreren Y-Achsen der Grafik dargestellt werden.

Erfindungsgemäß wird eine Grafik mit darstellbaren Kurven in Form von Messkurven von bereits analysierten Ergebnissen mit einer X-Achse als Koordinatenachse entlang einer Messstrecke so über ein Live-Bild oder nachträglich über ein gespeichertes Bild der Messstrecke gelegt, dass die X-Koordinaten im Bild mit den X-Koordinaten der Kurven übereinstimmen.

Das Verfahren zeichnet sich dabei durch folgende Merkmale aus:
- das Bild der Probenoberfläche wird durch eine Kamera in hoher Vergrößerung (500 - 3500 fach) aufgenommen, wobei der Bildmaßstab kalibriert ist,
- es werden immer nur der Teil der Messstrecke und der Messkurven dargestellt, der der Bildbreite des auf dem Bildschirm dargestellten Bildes der aufnehmenden Kamera entspricht,
- alle Messungen entlang der X-Achse erfolgen annähernd parallel zur Bildunterseite.
- die Probe unter der Kamera kann mit dem automatischen Tischsystem in beide Richtungen verfahren werden, wobei die Koordinaten des Tisches dabei ermittelt werden.
- die Messkurven nehmen die gesamte oder einen Teil der Breite des Bildes ein und werden automatisch an das Bild angepasst, wenn sich der Ausschnitt der Probe, der im Bild dargestellt wird, ändert.
- das Bild der Kamera wird zusammen mit Informationen gespeichert, die mindestens Angaben zu den Tischkoordinaten am Aufnahmeort, den Abstand von der Kamera zu einer Prüfspitze, die kalibrierte Bildbreite und Höhe und die Zahl der Pixel in Breite und Höhe enthalten.

In einer vorteilhaften Ausgestaltung kann der Nutzer festlegen, welche Kurven auf einer oder mehreren Y-Achsen der Grafik dargestellt werden. In einer vorteilhaften Ausgestaltung werden auf einer Achse, vorzugsweise der Y-Achse der Grafik das Profil der Oberfläche und auf einer zweiten Achse der Reibwert und auf einer dritten Achse die Normalkraft dargestellt.

Die Position der Grafik, deren Höhe üblicherweise kleiner ist als die Höhe des optischen Bildes, kann innerhalb der Höhe des Bildes verschoben werden, so dass sie den Messbereich nicht, teilweise oder ganz überdeckt.

Der Hintergrund der Grafik ist vorzugsweise transparent ausgebildet, so dass nur die Achsen mit Beschriftung und die Kurven selbst im Bild zu sehen sind. Dies ermöglicht eine geringe Überdeckung des Bildes.

In einer vorteilhaften Ausgestaltung kann zudem die Helligkeit des Bildes geregelt werden um eine optimale Einstellung zu erhalten.

Vorzugsweise werden zur einfachen Handhabung der erzeugbaren Dateien die Koordinaten der Tischpositionen während der Messung zusammen mit den Messdaten in dem gleichen Datenfile gespeichert. Dies vermindert zusätzliche Dateien und eventuellen Datenverlust.

Das Verfahren zeichnet sich vorzugsweise dadurch aus, dass nach einem Scratchtest oder einem Verschleißtest auf einer Achse zuerst das Profil der Oberfläche vor dem Test (Pre-Scan), gemessen mit einer kleinen Last bei der während des Abtastens keine plastischen Deformationen auftreten dargestellt wird. Es folgt eine zweite Darstellung, welche die Tiefe unter Last betrifft, wobei anschließend eine dritte Darstellung erfolgt, welche das Profil der Oberfläche nach dem Test (Post-Scan), gemessen mit der gleichen Last wie der Pre-Scan, wiedergibt.

Von besonderem Vorteil ist, wenn vor dem Einblenden der Grafik die Schärfe des Bildes automatisch durch Variation der Höhenposition der Kamera geregelt wird.

In einer alternativen Ausgestaltung nimmt die Grafik nicht die gesamte Bildbreite sondern nur einen Teil davon ein.

Die Erfindung wird nachfolgend an einem Ausführungsbeispiel und zugehörigen Zeichnungen näher erläutert.

Es zeigen:
- Figur 1: Oberfläche mit Scratchtest ohne Grafik,
- Figur 2: Oberfläche mit Scratchtest mit Grafik,
- Figur 3: Oberfläche mit Scratchtest mit verschobener Grafik.

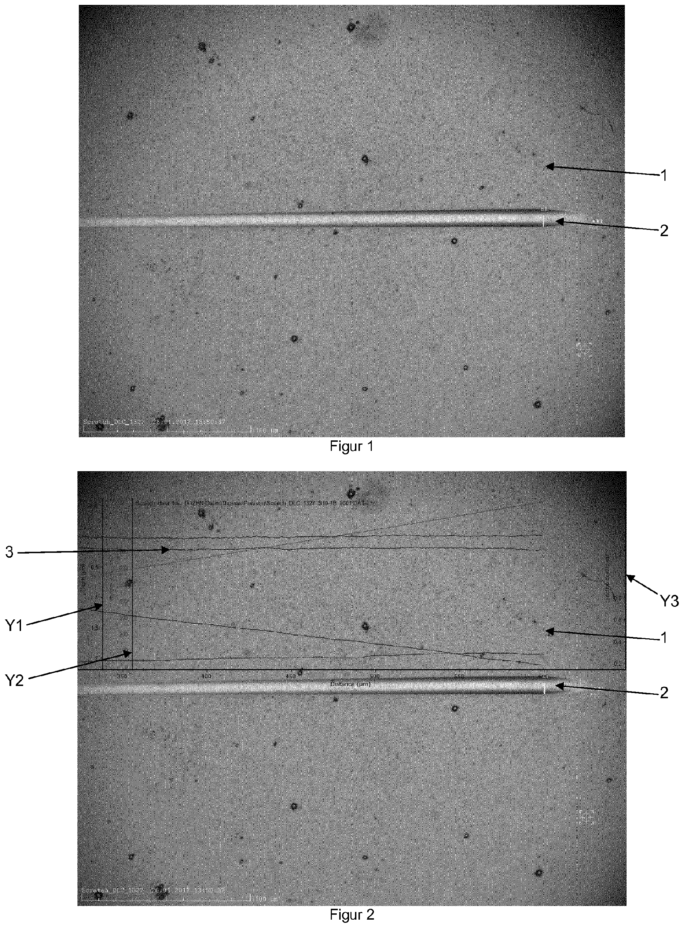

Figur 1 zeigt die Oberfläche 1 einer Probe mit Scratchtest 2 ohne eingeblendete Grafik. Die Vergrößerung ist etwa 1000-fach.

In Figur 2 ist das Bild von Figur 1 mit eingeblendeter Grafik 3 dargestellt. Der Scratchtest 2 hatte eine Länge von 600µm von denen der Bereich von 325µm bis 600µm in der Grafik dargestellt wird. Es werden drei Y-Achsen (Y1, Y2, Y3) verwendet.

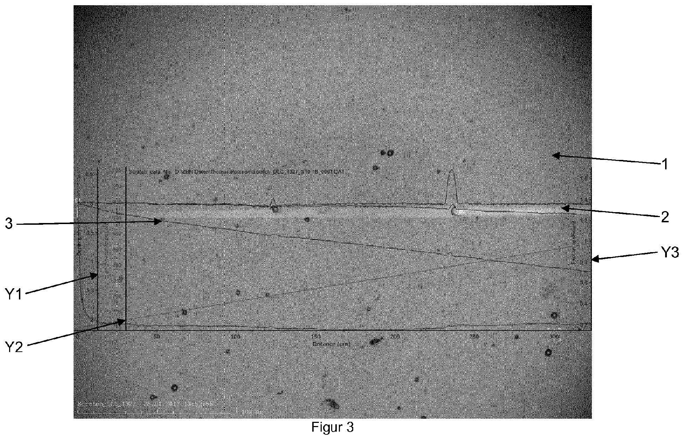

Figur 3 zeigt den Beginn des Scratchtest von Figur 1 mit eingeblendeter Grafik3. In diesem Beispiel wurde die Grafik 3 in Y-Richtung verschoben. Spitzen in der Eindringtiefe-Kurve können mit Partikeln in der Schicht korreliert werden. Da sich die Prüfspitze von rechts nach links bewegte, hatte die Vorderseite der Spitze zuerst Kontakt mit dem Partikel, was zu einem Versatz in X-Richtung führt.

Ziel der Erfindung ist es die Analyse von Messungen zu verbessern bei denen die Oberfläche einer Probe mit einer harten Spitze parallel zur Horizontalen eines optischen Kamerabildes der Probenoberfläche abgetastet oder verändert wird. Dies ist beispielsweise bei profilometrischen Messungen der Probentopographie, bei Scratchtests oder bei Verschleißtests der Fall.

Dazu ist es erforderlich, die Vergrößerung des Kamerabildes auf dem Bildschirm und den Abstand vom Zentrum des Kamerabildes zur Prüfspitze zu kalibrieren. Damit relevante Strukturen im Kamerabild aufgelöst werden können, ist eine hohe Vergrößerung von wenigstens 500-fach, besser aber 1000-fach oder mehr notwendig.

Wenn nun eine Messung durchgeführt wird, bei der mit einer Spitze die Oberfläche abgetastet wird, so kann dies mit einer Kraft erfolgen bei der sich die Oberfläche nicht ändert oder auch mit einer Kraft bei der die Spitze in die Oberfläche eindringt und die Probe bleibend verändert. Mindestens die Tischkoordinaten eines automatischen Tischsystems, bei denen die Messung beginnt und endet sind in elektronischer Form abzuspeichern. Besser ist es jedoch, die Tischkoordinaten während der Messung regelmäßig aufzuzeichnen und zusammen mit den anderen Messdaten in einem Datenfile abzuspeichern.

Die Tischkoordinaten während der Messung und der bekannte Abstand zwischen Prüfspitze und Kamera und deren Vergrößerung erlauben es nun eine eindeutige Korrelation zwischen den Messdaten und dem Kamerabild herzustellen, wenn die Messdaten in Abhängigkeit von der Positionsänderung, die gleichzeitig die Abtaststrecke ist, dargestellt werden. Dies kann dazu genutzt werden, eine Grafik mit den Messdaten zu erstellen bei der zumindest eine Y-Achse das Höhenprofil der Oberfläche angibt und in das Kamerabild so einzublenden, dass der Hintergrund transparent ist und man nur die Achsen mit Beschriftung und die Kurven sieht. Die X-Achse ist dabei parallel zur Bewegungsrichtung im Test. Die Grafik erstreckt sich üblicherweise über die gesamte Bildbreite.

Durch die Einblendung der Grafik unmittelbar ins Bild ist es besser möglich Krümmungen, Spitzen oder Täler in den Messkurven bestimmten Strukturen auf der Probe zuzuordnen ohne dass man Bild und Grafik nebeneinander legen muss, was bei der üblichen Bildschirmhöhe dazu führt, dass beide in der Höhe stark begrenzt werden müssen. Wenn man es zusätzlich ermöglicht, die Höhenposition der gesamten Grafik innerhalb des Bildes zu verschieben, kann man verhindern, dass wichtige Teile des Bildes durch Messkurven verdeckt werden. Für eine bessere Sichtbarkeit ist es außerdem erforderlich, dass man die Helligkeit des Kamerabildes regeln kann und dass die Kurven und Achsen entweder in einer hellen Farbe (beispielsweise Weiß) oder einer dunklen Farbe (beispielsweise Schwarz) dargestellt werden.

Das Einblenden der Grafik kann entweder in das Live-Bild der Kamera oder in ein abgespeichertes Bild erfolgen. Um die Grafik in einem abgespeicherten Bild korrekt anzuzeigen, ist es erforderlich, zusammen mit dem Bild die nötigen Informationen beispielsweise in einer Textdatei abzuspeichern. Dies umfasst mindestens die Koordinaten des Bildmittelpunkts, den Abstand Kamera - Prüfspitze, die Bildbreite und Höhe und die Zahl der Pixel in Breite und Höhe. Zusätzlich sollte der Name des Datenfiles gespeichert werden, dass die Messdaten von der Messung enthält, die dem Bild zugeordnet ist.

Bei Nutzung des Live-Bildes ist über einen Software-Algorithmus zu gewährleisten, dass der Ausschnitt der Messung, der in der Grafik angezeigt wird, bei einer Bewegung des Tisches in X-Richtung an den neuen Probenausschnitt angepasst und aktualisiert wird so dass immer der Teil der Messkurve angezeigt wird, der der Bildposition entspricht. Dadurch ist es nicht erforderlich Bilder von dem gesamten Messbereich zu machen und zusammenzufügen (insbesondere, wenn er sehr lang ist), sondern es kann der Bereich der abgetasteten Messtrecke unter der Kamera positioniert werden, der am interessantesten ist, und dann zusammen mit dem zugehörigen Messdaten in der Grafik in einem Bild abgespeichert werden.

Bei Scratch- und Verschleißtests kann neben dem Oberflächenprofil vor dem Test auch die Tiefe unter Last und das Oberflächenprofil nach dem Test auf der gleichen Achse dargestellt werden. Weitere Achsen können zur Darstellung der Normalkraft und des Reibwertes oder der Lateralkraft und zur Darstellung von weiteren Messgrößen, wie dem Kontaktwiderstand Spitze-Probe, genutzt werden.

## Patentansprüche

1. Verfahren zur Analyse von Oberflächenmessungen, insbesondere Scratchtests, Verschleißtests oder profilometrischen Messungen, wobei ein automatischen Tischsystem für die Lage und Messstrecke des zu analysierenden Bereichs verwendet wird, wobei die Tischkoordinaten des Tischsystems als Referenz dienen und dass eine Grafik (3) mit darstellbaren Kurven in Form von Messkurven von bereits analysierten Ergebnissen mit einer X-Achse als Koordinatenachse entlang der Messstrecke so über ein Live-Bild der Messstrecke gelegt wird, dass die X-Koordinaten im Bild mit den X-Koordinaten der Kurven übereinstimmen, wobei die X-Koordinaten des Bildes und die X-Koordinaten der Kurven den Tischkoordinaten in Bezug auf den Verfahrweg des Tisches entnehmbar sind und
- das Bild der Probenoberfläche (1) durch eine Kamera aufgenommen wird, wobei der Bildmaßstab kalibriert ist,
- immer nur der Teil der Messtrecke und der Messkurven dargestellt werden, der der Bildbreite des auf dem Bildschirm dargestellten Bildes der aufnehmenden Kamera entspricht,
- alle Messungen entlang der X-Achse annähernd parallel zur Bildunterseite erfolgen,
- die Probe unter der Kamera mit dem automatischen Tischsystem in beide Richtungen verfahren wird und die Tischkoordinaten dabei ermittelt werden,
- dass die Messkurven die gesamte oder einen Teil der Breite des Bildes einnehmen und automatisch an das Bild angepasst werden, wenn sich der Ausschnitt der Probe, der im Bild dargestellt wird, ändert und dass die Kombination des Bildes der Probenoberfläche (1) mit der Grafik (3) der Messkurven als neues Bild gespeichert wird
- das Bild der Kamera zusammen mit Informationen gespeichert wird, die mindestens Angaben zu den Tischkoordinaten am Aufnahmeort, den Abstand von der Kamera zu einer Prüfspitze, die kalibrierte Bildbreite und Höhe und die Zahl der Pixel in Breite und Höhe enthalten.

2. Verfahren nach Anspruch 1, **dadurch gekennzeichnet, dass** durch den Nutzer ausgewählt wird, welche Kurven auf einer oder mehreren Y-Achsen der Grafik (3) der Messkurven dargestellt werden.

3. Verfahren nach Anspruch 1 oder 2, **dadurch gekennzeichnet, dass** die Position der Grafik (3) der Messkurven, innerhalb der Höhe des Bildes verschoben wird, so dass sie den Messbereich nicht, teilweise oder ganz überdeckt.

4. Verfahren nach einem der Ansprüche 1 bis 3, **dadurch gekennzeichnet, dass** der Hintergrund der Grafik (3) der Messkurven transparent ist so dass nur die Achsen mit Beschriftung und die Messkurven selbst im Bild zu sehen sind.

5. Verfahren nach einem der Ansprüche 1 bis 4, **dadurch gekennzeichnet, dass** die Helligkeit des Bildes geregelt wird.

6. Verfahren nach Anspruch 1, **dadurch gekennzeichnet, dass** die Vergrößerung des Bildbereichs zwischen 500 und 3500 liegt.

7. Verfahren nach einem der Ansprüche 1 bis 6, **dadurch gekennzeichnet, dass** die Koordinaten der Tischpositionen während der Messung zusammen mit den Messdaten in dem gleichen Datenfile gespeichert werden.

8. Verfahren nach einem der Ansprüche 1 bis 7, **dadurch gekennzeichnet, dass** auf einer Achse der Grafik (3) das Profil der Oberfläche (1) und auf einer zweiten Achse der Reibwert und auf einer dritten Achse die Normalkraft der Probe dargestellt werden.

9. Verfahren nach einem der Ansprüche 1 bis 8, **dadurch gekennzeichnet, dass** nach einem Scratchtest (2) oder einem Verschleißtest auf einer Achse zuerst das Profil der Oberfläche (1) vor dem Test (Pre-Scan), gemessen mit einer kleinen Last bei der während des Abtastens keine plastischen Deformationen auftreten, zweitens die Tiefe unter Last und drittens das Profil der Oberfläche (1) nach dem Test (Post-Scan), gemessen mit der gleichen Last wie der Pre-Scan, dargestellt werden.

10. Verfahren nach einem der Ansprüche 1 bis 9, **dadurch gekennzeichnet, dass** vor dem Einblenden der Grafik (3) die Schärfe des Bildes automatisch durch Variation der Höhenposition der Kamera geregelt wird.

11. Verfahren nach einem der Ansprüche 1 bis 10, **dadurch gekennzeichnet, dass** die Grafik (3) nicht die gesamte Bildbreite sondern nur einen Teil davon einnimmt.

## Claims

1. Method for analyzing surface measurements, in particular scratch tests, wear tests or profilometric measurements, wherein an automatic table system is used for the position and measurement section of the area to be analyzed, wherein the table coordinates of the table system serve as a reference and that a graphic (3) with displayable curves in the form of measurement curves of already analyzed results with an X-axis as a coordinate axis along the measurement section is superimposed on a live image of the measurement section in such a manner that the X-coordinates in the image correspond to the X-coordinates of the curves, wherein the X-coordinates of the image and the X-coordinates of the curves can be taken from the table coordinates with respect to the travel path of the table and
- the image of the specimen surface (1) is taken by a camera, wherein the image scale is calibrated,
- always only the part of the measurement section and the measurement curves are displayed which corresponds to the image width of the image of the recording camera displayed on the screen,
- all measurements along the X-axis are made approximately parallel to the underside of the image,
- the specimen is moved under the camera with the automatic table system in both directions and the table coordinates are determined in the process,
- that the measurement curves occupy all or part of the width of the image and are automatically adapted to the image, when the section of the specimen represented in the image changes, and that the combination of the image of the specimen surface (1) with the graphic (3) of the measurement curves is stored as a new image,
- the image of the camera is stored together with information containing at least details of the table coordinates at the recording location, the distance from the camera to a test probe, the calibrated image width and height and the number of pixels in width and height.

2. Method according to claim 1, **characterized in that** it is selected by the user which curves are displayed on one or more Y-axes of the graphic (3) of the measurement curves.

3. Method according to claim 1 or 2, **characterized in that** the position of the graphic (3) of the measurement curves is shifted within the height of the image, so that it does not, partially or completely cover the measurement area.

4. Method according to one of claims 1 to 3, **characterized in that** the background of the graphic (3) of the measurement curves is transparent so that only the axes with labeling and the measurement curves themselves are visible in the image.

5. Method according to one of claims 1 to 4, **characterized in that** the brightness of the image is controlled.

6. Method according to claim 1, **characterized in that** the magnification of the image area is between 500 and 3500.

7. Method according to one of claims 1 to 6, **characterized in that** the coordinates of the table positions during the measurement are stored together with the measurement data in the same data file.

8. Method according to one of claims 1 to 7, **characterized in that** on one axis of the graphic (3) the profile of the surface (1) and on a second axis the friction value and on a third axis the normal force of the specimen are displayed.

9. Method according to one of claims 1 to 8, **characterized in that** after a scratch test (2) or a wear test on one axis, firstly the profile of the surface (1) before the test (pre-scan), measured with a small load at which no plastic deformations occur during the scanning, secondly the depth under load and thirdly the profile of the surface (1) after the test (post-scan), measured with the same load as the pre-scan, are displayed.

10. Method according to one of claims 1 to 9, **characterized in that**, before the graphic (3) is superimposed, the sharpness of the image is automatically controlled by varying the height position of the camera.

11. Method according to one of claims 1 to 10, **characterized in that** the graphic (3) does not occupy the entire image width but only a part thereof.

## Revendications

1. Procédé d'analyse de mesures de surface, en particulier de tests de rayage, de tests d'usure ou de mesures profilométriques, dans lequel
un système de table automatique est utilisé pour la position et le trajet de mesure de la zone à analyser, dans lequel les coordonnées de table du système de table servent de référence et un graphique (3), avec des courbes représentables sous la forme de courbes de mesure de résultats déjà analysés avec un axe X comme axe de coordonnées le long du trajet de mesure, est superposé à une image en direct du trajet de mesure de telle sorte que les coordonnées X dans l'image coïncident avec les coordonnées X des courbes, dans lequel les coordonnées X de l'image et les coordonnées X des courbes peuvent être tirées des coordonnées de table en rapport avec la course de déplacement de la table et
- l'image de la surface d'échantillon (1) est prise par une caméra, l'échelle de l'image étant calibrée,
- seule est toujours représentée la partie du trajet de mesure et des courbes de mesure qui correspond à la largeur d'image de l'image représentée sur l'écran de la caméra prenant l'image,
- toutes les mesures sont effectuées le long de l'axe X à peu près parallèlement au côté inférieur de l'image,
- l'échantillon est déplacé sous la caméra dans les deux sens à l'aide du système de table automatique, les coordonnées de table étant alors déterminées,
- les courbes de mesure occupent tout ou partie de la largeur de l'image et sont automatiquement adaptées à l'image lorsque le détail de l'échantillon représenté dans l'image change, et la combinaison de l'image de la surface d'échantillon (1) avec le graphique (3) des courbes de mesure est enregistrée comme une nouvelle image,
- l'image de la caméra est enregistrée avec des informations comprenant au moins des indications sur les coordonnées de table à l'endroit de prise de vue, la distance entre la caméra et une pointe de touche, la largeur et la hauteur d'image calibrées et le nombre de pixels en largeur et en hauteur.

2. Procédé selon la revendication 1, **caractérisé en ce que** l'utilisateur choisit quelles courbes sont représentées sur un ou plusieurs axes Y du graphique (3) des courbes de mesure.

3. Procédé selon la revendication 1 ou 2, **caractérisé en ce que** la position du graphique (3) des courbes de mesure est déplacée dans la hauteur de l'image de manière à ce qu'il ne recouvre pas, recouvre partiellement ou recouvre totalement la zone de mesure.

4. Procédé selon l'une des revendications 1 à 3, **caractérisé en ce que** l'arrière-plan du graphique (3) des courbes de mesure est transparent, de sorte que seuls les axes avec inscription et les courbes de mesure elles-mêmes sont visibles dans l'image.

5. Procédé selon l'une des revendications 1 à 4, **caractérisé en ce que** la luminosité de l'image est régulée.

6. Procédé selon la revendication 1, **caractérisé en ce que** le grossissement de la zone d'image se situe entre 500 et 3500.

7. Procédé selon l'une des revendications 1 à 6, **caractérisé en ce que** les coordonnées des positions de table pendant la mesure sont enregistrées avec les données de mesure dans le même fichier de données.

8. Procédé selon l'une des revendications 1 à 7, **caractérisé en ce que** l'on représente sur un axe du graphique (3) le profil de la surface (1), sur un deuxième axe le coefficient de frottement et sur un troisième axe la force normale de l'échantillon.

9. Procédé selon l'une des revendications 1 à 8, **caractérisé en ce que**, après un test de rayage (2) ou un test d'usure sur un axe, on représente premièrement le profil de la surface (1) avant le test (pré-scan), mesuré avec une petite charge pour laquelle aucune déformation plastique n'apparaît pendant la détection, deuxièmement la profondeur sous charge et troisièmement le profil de la surface (1) après le test (post-scan), mesuré avec la même charge que le pré-scan.

10. Procédé selon l'une des revendications 1 à 9, **caractérisé en ce que**, avant l'affichage du graphique (3), la netteté de l'image est régulée automatiquement en faisant varier la position en hauteur de la caméra.

11. Procédé selon l'une des revendications 1 à 10, **caractérisé en ce que** le graphique (3) n'occupe pas toute la largeur d'image mais seulement une partie de celle-ci.
